# EUROPEAN PATENT APPLICATION

(11) **EP 1 985 933 A2**
(43) Date of publication of application: **29.10.2008**
(21) Application number: 08155219.2
(22) Date of filing: 25.04.2008
(51) Int. Cl.: F24D 19/10

(54) **Hot water supply device**

(30) Priority: 27.04.2007 JP 2007118142
(71) Applicant: Sanden Corporation, Isesaki-shi, Gunma 372-8502 (JP)
(72) Inventor: Kobayashi, Kouji, Isesaki-shi Gunma 372-8502 (JP)
(74) Representative: Haley, Stephen

(57) **Abstract**

A hot water supply device including a memory unit (67) that stores a control program (67a) and a wireless modem (66a) that communicates with an external server (S) having a latest control program stored therein via a communication network (N), the device supplying hot water based on the control program (67a) stored in the memory unit (67), the device including: a supply record (67b) that records calendar information and a time when hot water is supplied; and a first control unit (60) that activates the wireless modem (66a), the wireless modem (66a) being halted, makes the wireless modem (66a) receive the latest control program stored in the server (S) when the control program has been updated, and updates the control program (67a) stored in the memory unit (67) with the control program received by the wireless modem (66a) based on the calendar information and times recorded during a predetermined time period.

## Description

The present invention relates to a hot water supply device that supplies hot water stored in a hot water storage tank to, for example, a bath tub, based on a control program.

Conventionally, as a hot water supply device that can update a control program without replacement of control boards, one formed by connecting, via a communication network, a hot water supply device having a modem therein and a server having a control program stored therein is known. According to this hot water supply device, upon a request from the hot water supply device or the server, the control program is downloaded from the server to the hot water supply device via the communication network (see, for example, Japanese Patent Publication No. 11-211230).

In general, wireless modems, which can easily be installed, are used as modems for hot water supply devices, but wireless modems have a problem in consuming power for waiting for reception. Also, when hot water is supplied during updating of the control program, glitches, such as supplying high-temperature hot water, may occur.

The present invention have been made in view of the aforementioned problems, and an object of the present invention is to provide a hot water supply device that consume less power and is capable of preventing glitches.

In order to achieve the above object, the present invention proposes a hot water supply device including memory means for storing a control program, and communication means for communicating with an external server having a latest control program stored therein via a communication network, the device supplying hot water based on the control program stored in the memory means, the device comprising: communication control means for activating the communication means, the communication means being halted, and making the communication means receive the latest control program stored in the server when the control program has been updated; recording means for recording calendar information and a time when hot water is supplied; and update control means for updating the control program stored in the memory means with the control program received by the communication means, based on calendar information and times recorded during a predetermined time period.

According to the present invention, the control program is received when the halted communication means is activated and the latest control program stored in the server has been updated. In other words, the communication means operates only when it confirms whether or not the control program stored in the server has been updated to the latest one. Also, since the control program is updated with a control program based on calendar information and times recorded during a predetermined time period, it is possible to update the control program on the same day as the day having the time zone whose time of no hot water being supplied is the longest during one week and at a time included in that time zone, for example.

The aforementioned object and the other objects, the characteristics and the advantages of the present invention will be clarified by the following description and the attached drawings.
FIG. 1 is a schematic configuration diagram of a hot water supply device;
FIG. 2 is a block diagram illustrating a configuration of a control system for the hot water supply device shown in FIG. 1;
FIG. 3 is a diagram illustrating a supply record stored in the memory unit shown in FIG. 2;
FIG. 4 is a diagram illustrating another example of a supply record stored in the memory unit shown in FIG. 2;
FIG. 5 is a flowchart illustrating an operation relating to an update of a control program;
FIG. 6 is a diagram illustrating a supply record stored in the memory unit shown in FIG. 2; and
FIG. 7 is a flowchart illustrating an operation relating to an update of a control program.

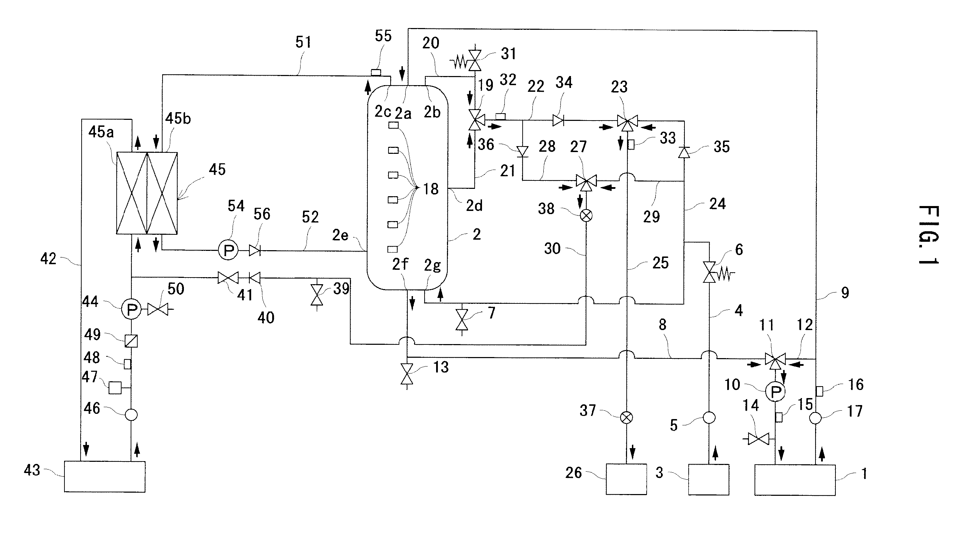

FIGS. 1 to 5 show a first embodiment according to the present invention. First, the configuration of a heat pump-type hot water supply device according to the present embodiment will be described with reference to FIG. 1.

A heat pump unit 1 has a known configuration in which a compressor, a condenser, a decompressor, an evaporator, etc., are sequentially connected via a refrigerant pipe with a refrigerant enclosed therein, and heats externally-supplied water or hot water by means of the condenser. Although a heat pump-type one is used for the hot water supply device according to the present embodiment, the present invention is not limited to this type, and other type ones, such as electric power or gas, may also be used.

At an upper portion of a hot water storage tank 2, a circulation inlet 2a, a first water outlet 2b and a second water outlet 2c are provided, at a middle portion of the hot water storage tank 2, a third water outlet 2d, and a second water inlet 2e, which is located below the third water outlet 2d, are provided, and at a lower portion of the hot water storage tank 2, a circulation outlet 2f and a third water inlet 2g are provided. As a result of the hot water storage tank 2 being configured in this manner, normal temperature tap water (hereinafter, tap water shall have normal temperature) is poured from an external water source 3 into the hot water storage tank 2 via a water supply pipe 4 and the third water inlet 2g, and as a result, the inside of the hot water storage tank 2 is filled with water.

At the water supply pipe 4, a strainer 5, a decompression valve 6 and a drain valve 7 are sequentially installed from the water source 3 toward the hot water storage tank. Here, the strainer 5 prevents foreign substances from entering from the water source 3, the decompression valve 6 reduces the pressure of tap water, and the drain valve 7 drains tap water to be supplied to the hot water storage tank 2.

The circulation outlet 2f and the circulation inlet 2a are connected by a circulation outlet pipe 8, a condenser (not shown) in the heat pump unit 1, and a circulation inlet pipe 9, thereby tap water in the hot water storage tank 2 circulating. At the circulation outlet pipe 8, a circulation pump 10 is installed. As a result of driving this circulation pump 10, tap water flowing out of the lower portion of the hot water storage tank 2 is heated by the condenser (not shown) in the heat pump unit 1, and hot water of approximately 70°C to 90°C (hereinafter, temperature(s) in this range are referred to as high temperature(s)) is poured from the upper portion of the hot water storage tank 2.

A bypass valve 11 is a known electric three-way valve, and is provided at the circulation outlet pipe 8. By means of a switching operation being performed on the bypass valve 11, the volume of tap water flowing out of the circulation outlet 2f and the volume of hot water branched off from the circulation inlet pipe 9 via a bypass pipe 12 are controlled and made to flow into the heat pump unit 1.

Drain valves 13 and 14 are provided at the circulation outlet pipe 8. The drain valve 13 drains tap water flowing out of the circulation outlet 2f, and the drain valve 14 drains hot water that have passed though the bypass valve 11.

A temperature sensor 15 is provided at the circulation outlet pipe 8, and detects the temperature of tap water to be supplied to the heat pump unit 1. A temperature sensor 16 is provided at the circulation inlet pipe 9, and detects the temperature of hot water returned from the heat pump unit 1.

A strainer 17 is provided at the circulation inlet pipe 9, and removes foreign substances from hot water before the hot water being branched off by the bypass pipe 12.

A plurality of stored hot water temperature sensors 18 are provided at equal spaces in the upper and lower directions of the hot water storage tank 2, and detect the temperature of hot water at their respective positions in the storage tank 2. It is possible to know the volume of hot water at a predetermined temperature, for example, a high temperature, in the hot water storage tank 2 based on which stored hot water temperature sensors 18 from among the stored hot water temperature sensors 18 have detected temperatures equal to or higher than the predetermined temperature (i.e., where in the hot water storage tank 2 the stored hot water temperature sensors 18 that have detected temperatures equal to or higher than the predetermined temperature are located).

A first mixing valve 19 mixes hot water in the upper portion of the hot water storage tank 2 and hot water in the middle portion of the hot water storage tank 2. One end of the first mixing valve 19 is connected to the first water outlet 2b of the hot water storage tank 2 via a first water outlet pipe 20, and the other end is connected to the third water outlet 2d of the hot water storage tank 2 via a third water outlet pipe 21. The temperature of the middle portion of the hot water storage tank 2 is, as described later, approximately 30°C to 50°C (hereinafter referred to as "middle temperature(s)"), this mixed water in which the middle-temperature hot water and the high-temperature hot water are mixed flow out to a first mixing pipe 22.

A second mixing valve 23 mixes hot water entering via the first mixing pipe 22, and tap water branched off by a first water supply pipe 24 from the water supply pipe 4, and supplies it to a supply destination 26 via a second mixing pipe 25.

A third mixing valve 27 mixes hot water branched off by a branched pipe 28 from the first mixing pipe 22, and tap water branched off by a second water supply pipe 29 from the first water supply pipe 24, and makes it flow out to a third mixing pipe 30.

A safety valve 31 is provided at the first water outlet pipe 20, and maintains the pressure of high-temperature hot water flowing out of the first water outlet 2b to be constant.

A temperature sensor 32 is provided at the first mixing pipe 22, and a temperature sensor 33 is provided at the second mixing pipe 25. The temperature sensor 32 detects the temperature of hot water flowing out of the first mixing valve 19, and the temperature sensor 33 detects the temperature of hot water flowing out of the second mixing valve 23.

A check valve 34 is provided at the first mixing pipe 22, a check valve 35 is provided at the first water supply pipe 24, and a check valve 36 is provided at the branched pipe 28. The check valve 34 prevents counterflow of hot water flowing out of the first mixing valve 19, the check valve 35 prevents counterflow of tap water branched off from the water supply pipe 4, and the check valve 36 prevents counterflow of hot water branched off from the first mixing pipe 22.

A flowmeter 37 is provided at the second mixing pipe 25, and a flowmeter 38 is provided at the third mixing pipe 30. The flowmeter 37 measures the flow volume of hot water to be supplied from the second mixing valve 23 to the supply destination 26, and the flowmeter 38 measures the flow volume of hot water flowing out of the third mixing valve 27.

At the third mixing pipe 30, a drain valve 39, a check valve 40 and an air open valve 41 are installed. The drain valve 39 drains hot water flowing in the pipe, and the check valve 40 prevents counterflow of hot water.

A bath circulation pipe 42 supplies hot water entering via the third mixing pipe 30 to a bath tub 43, and drives a re-heating pump 44, thereby hot water in the bath tub 43 being heated by a water heat exchanger secondary side 45a, which will be described later, and being returned to the bath tub 43.

At the bath circulation pipe 42, a strainer 46 that prevents foreign substances from entering from the bath tub 43, a water level sensor 47 that detects the level of hot water in the bath tub 43, a temperature sensor 48 that detects the temperature of hot water flowing in the pipe before the hot water is heated by the later-described water heat exchanger secondary side 45a, a flow switch 49 that is switched on or off depending on the flow rate of hot water flowing in the pipe, and a drain valve 50 that can drain hot water flowing in the pipe are provided.

The water heat exchanger 45 includes the water heat exchanger secondary side 45a connected to the bath circulation pipe 42, and a water heat exchanger primary side 45b connected to a second water outlet pipe 51 and a second water inlet pipe 52, and the water heat exchanger primary side 45b is configured so as to exchange heat with the water heat exchanger secondary side 45a.

The second water outlet 2c and the second water inlet 2e are connected by the second water outlet pipe 51, the water heat exchanger primary side 45b and the second water inlet pipe 52, whereby hot water in the hot water storage tank 2 can circulate. As a result of driving a heating pump 54 and the re-heating pump 44, high-temperature hot water flowing out of the upper portion of the hot water storage tank 2 heats the hot water flowing in the water heat exchanger secondary side 45a by means of the water heat exchanger primary side 45b, and the aforementioned middle-temperature hot water is returned from the lower part of the middle portion of the hot water storage tank 2.

A temperature sensor 55 is provided at the second water outlet pipe 51, and detects the temperature of high-temperature hot water flowing out of the second water outlet 2c.

A check valve 56 is provided at the second water inlet pipe 52, and prevents counterflow of middle-temperature hot water flowing out of the water heat exchanger primary side 45b.

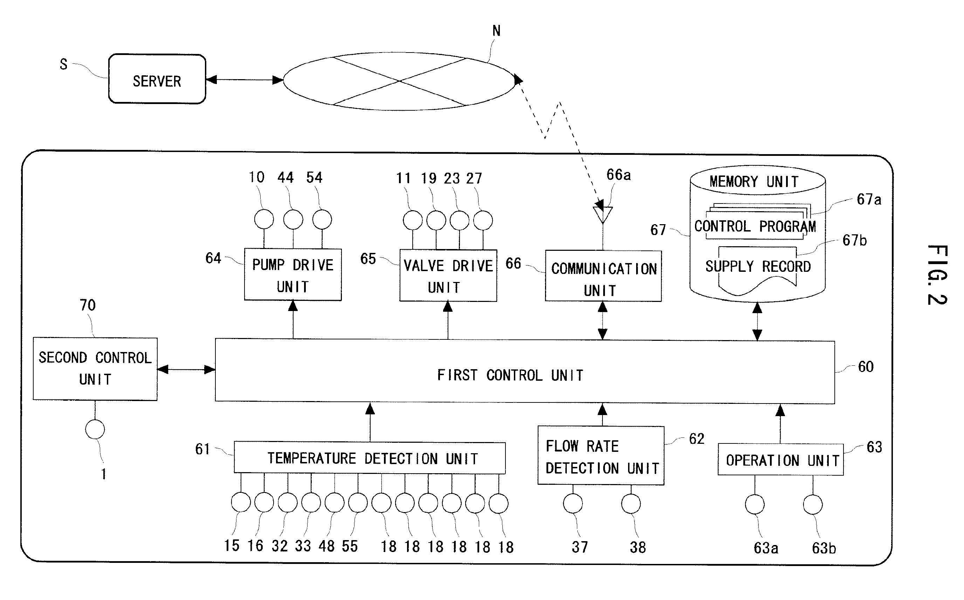

Next, the configuration of a control system for the hot water supply device shown in FIG. 1 will be described with reference to FIG. 2.

A first control unit 60 and a second control unit 70 each consist of a known computer provided with a CPU and memory such as RAM and ROM, and mutually exchange control signals and data necessary for control. Although in the present embodiment, the first control unit 60 and the second control unit 70 are separate computers, the present invention is not limited to this configuration, and the first control unit 60 and the second control unit 70 may also be included in one computer.

The second control unit 70 is connected to the heat pump unit 1, and the second control unit 70 drives the heat pump unit 1 based on data input from sensors, etc., provided in the heat pump unit 1 and a program stored in its own memory.

The first control unit 60 is intended to control the operation of the hot water supply device body excluding the heat pump unit 1. The first control unit 60 is connected to a temperature detection unit 61, a flow rate detection unit 62, an operation unit 63, a pump drive unit 64, a valve drive unit 65, a communication unit 66, a memory unit 67 and the second control unit 70. Also, the first control unit 60 outputs control signals to the respective units based on data input from the units, and the later-described control program stored in its own memory.

The temperature detection unit 61 is connected to the aforementioned temperature sensors 15, 16, 32, 33, 48 and 55, and the aforementioned stored hot water temperature sensors 18. The temperature detection unit 61 converts detection signals input from the respective sensors 15, 16, 32, 33, 48, 55 and 18 into temperature data, and outputs the data to the first control unit 60.

The flow rate detection unit 62 is connected to the flowmeters 37 and 38, and the flow rate detection unit 62 converts detection signals input from the flowmeters 37 and 38 into flow rate data, and outputs the flow rate data to the first control unit 60.

The operation unit 63 is connected to a first remote controller 63a that controls the temperature, etc., of hot water to be supplied to the supply destination 26, and also to a second remote controller 63b that controls the water level and the temperature, etc., of hot water in the bath tub 43. The operation unit 63 outputs operation data input from the remote controllers 63a and 63b to the first control unit 60.

The pump drive unit 64 is connected to the aforementioned circulation pump 10, the aforementioned re-heating pump 44 and the aforementioned heating pump 54. The pump drive unit 64 outputs control signals input from the first control unit 60 to the circulation pump 10, the re-heating pump 44 and the heating pump 54, respectively.

The valve drive unit 65 is connected to the aforementioned bypass valve 11, the aforementioned first mixing valve 19, second mixing valve 23 and third mixing valve 27, and the valve drive unit 65 outputs control signals input from the first control unit 60 to the bypass valve 11, the first mixing valve 19, the second mixing valve 23, and the third mixing valve 27, respectively.

The communication unit 66 is connected to a wireless modem 66a that communicates with a server S having the latest control program stored therein via a communication network N. The communication unit 66 outputs controls signals input from the first control unit 60 to the wireless modem 66a, and outputs the latest control program received and input by the wireless modem 66a to the first control unit 60. The wireless modem 66a is ordinarily halted, and it is activated upon the input of a control signal from the first control unit 60 via the communication unit 66.

The memory unit 67 includes a known mass-memory device, and stores a plurality of control programs 67a, and a supply record 67b.

Each control program 67a is executed after being wholly or partially stored in the memory in the first control unit 60 upon a request of the first control unit 60, and intended to control the operations of the respective units. Although in the present embodiment, a plurality of control programs 67a are stored in the memory unit 67, the present invention is not limited to this configuration, and the memory unit 67 may store one control program 67a.

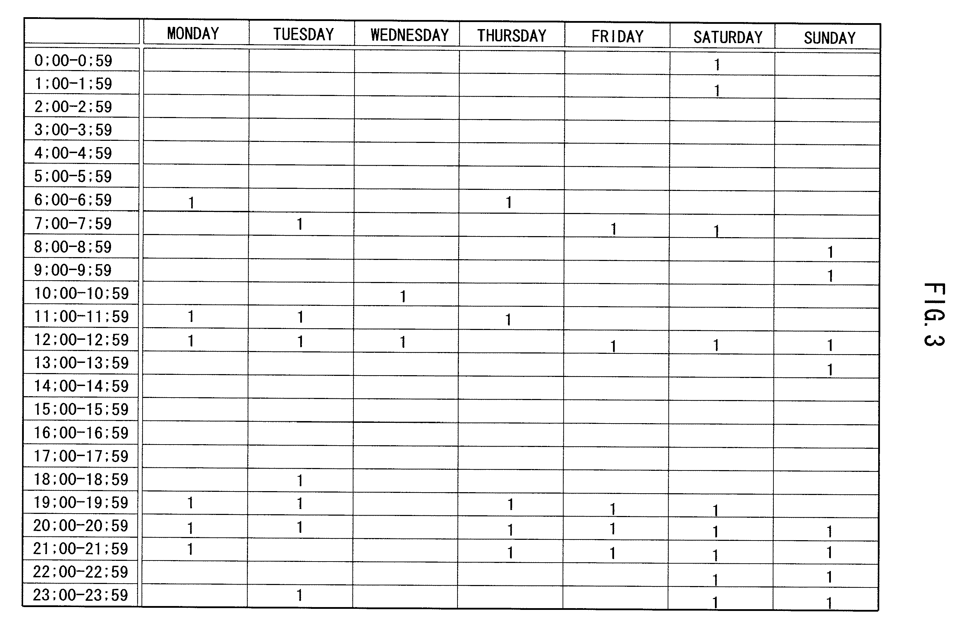

The supply record 67b is a file for recording the calendar information and time when hot water is supplied to the supply destination 26 or the bath tub 43, and for example, as shown in FIG. 3, records occurrence or non-occurrence of hot water supply during one week by unit of one hour for each day.

Although in the present embodiment, day is used as calendar information recorded in the supply record 67b, the present invention is not limited to this case, and at least one of year, month, date, public holiday, high holiday and season may be used other than day. As a result, occurrence or non-occurrence of hot water supply for each public holiday, for example, is recorded.

The first control unit 60, upon the input of flow rate data from the flowmeters 37 and 38 via the flow rate detection unit 62, obtains the day and time by means of its own calendar function and clock function, and, updates the supply record 67b stored in the memory unit 67 by recording "1" in the field of 6:00 to 6:59, Monday, for example. Also, when the first control unit 60 has created the supply record 67b for a period of one week shown in FIG. 3, it sets an update timing, which will be described later, in the update cycle set in advance and stored in its own memory, for example, an update cycle of one week, based on the supply record 67b, and stores it in its own memory. Consequently, the update timing is set based on the calendar information and times recorded in the supply record 67b as calendar information and times recorded during a predetermined time period. The memory in the first control unit 60 may be included in the control unit 67, or may also be another memory not shown.

In the present embodiment, the time period whose time of no hot water being supplied is the longest in the supply record 67b shown in FIG. 3, i.e., a time period of 13:00, Wednesday to 5:59, Thursday, is selected, and the time in the middle of that water supply halt period, i.e., 21: 30, Wednesday, is set as the update timing. Consequently, the update timing is set based on the time period whose time of no hot water being supplied is the longest in the calendar information and times recorded in the supply record 67b as calendar information and times recorded during the predetermined time period.

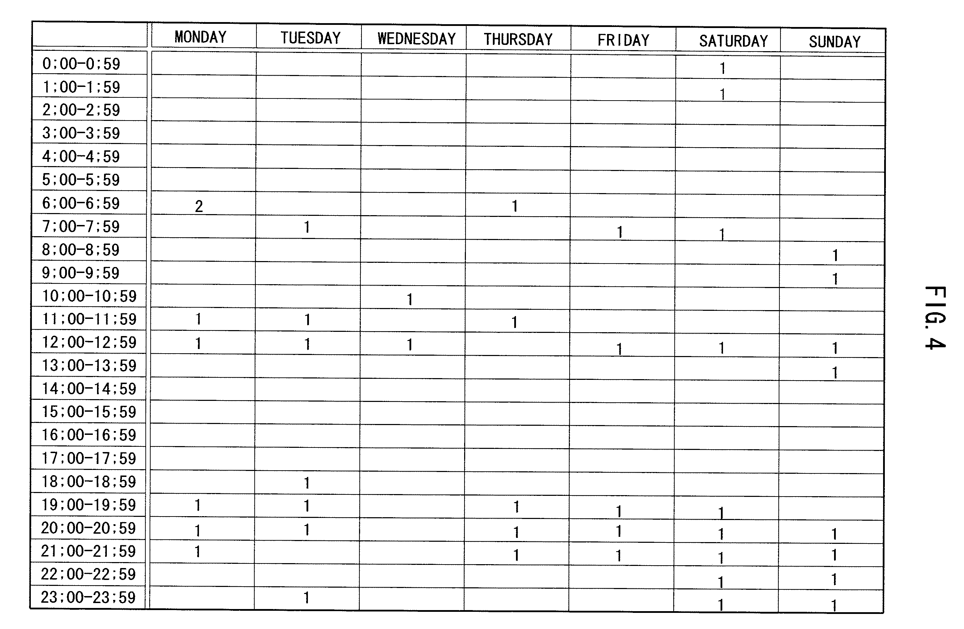

It is sufficient that the predetermined time period in which calendar information and time are recorded in the supply record 67b when hot water is supplied to the supply destination 26 or the bath tub 43 is equal or shorter than the update cycle, but preferably, it is no less than one week, and if possible, it is desirable that it is no less than one year. Also, the update cycle is not limited to a fixed time period, and it may be a random time period within one week, for example. Furthermore, the supply record 67b is not limited to the case where occurrence or non-occurrence of hot water supply is recorded, and the supply record 67b stored in the memory unit 67 may be updated by, when hot water is supplied to the supply destination 26 or the bath tub 43 twice from 6:00 to 6: 59, Monday, for example, recording "1" in the field of 6:00 to 6: 59, Monday at the time of the first supply, and recording "2" by adding "1" at the time of the second supply as shown in FIG. 4.

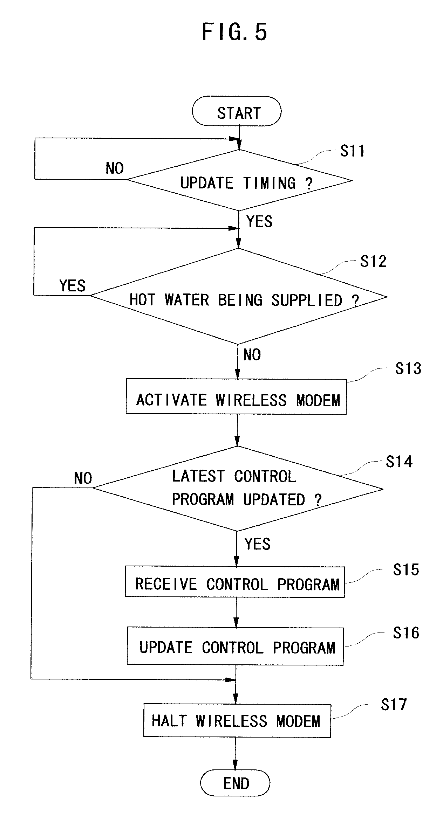

Next, an operation relating to an update of the control program 67a stored in the memory unit 67 will be described with reference to FIG. 5.

As shown in FIG. 5, the first control unit 60 determines whether or not the set update timing has been reached, by means of its own calendar function and clock function (step S11), and repeats the processing at step S11 until the set update timing is reached.

If it is determined that the set update timing has been reached, the first control unit 60 determines whether or not hot water is being supplied to the supply destination 26 or the bath tub 43 based on flow rate data input from the flowmeters 37 and 38 via the flow rate detection unit 62 (step S12), and repeats the processing at step S12 until the hot water supply to the supply destination 26 or the bath tub 43 ceases.

If it is determined that hot water is not being supplied to the supply destination 26 or the bath tub 43, the first control unit 60 activates the wireless modem 66a via the communication unit 66 (step S13), and makes the wireless modem 66a communicate with the server S via the communication network N to determine whether or not the latest control program stored in the server S has been updated (step S14).

If it is determined that the latest control program stored in the server S has been updated, the first control unit 60 makes the wireless modem 66a receive the latest control program stored in the server S, via the communication unit 66 (step S15). Thus, when the halted wireless modem 66a is activated and when the latest control program stored in the server S has been updated, that control program is received. In other words, the wireless modem 66a operates only when it confirms whether or not the latest control program stored in the server S has been updated.

Subsequently, the first control unit 60 updates the relevant control program 67a, from among the plurality of control programs 67a stored in the memory unit 67, with the control program received by the wireless modem 66a (step S16). Thus, the update timing is set based on the time period whose time of no hot water being supplied is the longest in the calendar information and times recorded in the supply record 67b during the predetermined time period, and when the update timing has been reached, the control program 67a stored in the memory unit 67 is updated with the control program received by the wireless modem 66a, and consequently, the possibility that hot water is supplied during updating of the control program 67a is lowered.

If it is determined at step S14 that the latest control program stored in the server S has not been updated, or after the processing at step S16, the first control unit 60 halts the activated wireless modem 66a via the communication unit 66 (step S17), and terminates the operation relating to the update of the control program.

Although in the present embodiment, when the set update timing has been reached, the wireless modem 66a is activated and made to receive the control program to update the control program 67a stored in the memory unit 67, the present invention is not limited to this case. When the wireless modem 66a is activated before the update timing is reached and it is determined that the latest control program stored in the server S has been updated, it is also possible to wait for the forthcoming update timing and update the control program 67a stored in the memory unit 67 at the set update timing.

As described above, with the hot water supply device according to the present embodiment, when the halted wireless modem 66a is activated and the latest control program stored in the server S has been updated at the time of that activation, that control program is received. Accordingly, the wireless modem 66a operates only when it confirms whether or not the latest control program stored in the server S has been updated. As a result, conventionally-necessary power consumed when the wireless modem 66a waits for reception can be reduced, making it possible to reduce power consumption.

Also, since the update timing is set based on the calendar information and times recorded in the supply record 67b during the predetermined time period, it is possible to update the control program on the same day as the day having the time zone whose time of no hot water being supplied is the longest during one week and at a time included in that time zone, for example. As a result, it is possible to reduce the possibility that hot water is supplied when the control program 67a stored in the memory unit 67 is being updated, reducing the possibility of causing glitches such as supplying high-temperature hot water, thereby making it possible to prevent such glitches.

Furthermore, since at least one of year, month, date, day, public holiday, high day and season is recorded in the supply record 67b, occurrence or non-occurrence of hot water supply for each public holiday is recorded, for example. As a result, various update cycles can be employed: for example, a proper update timing can be set in an update cycle of every public holiday based on the supply record 67b.

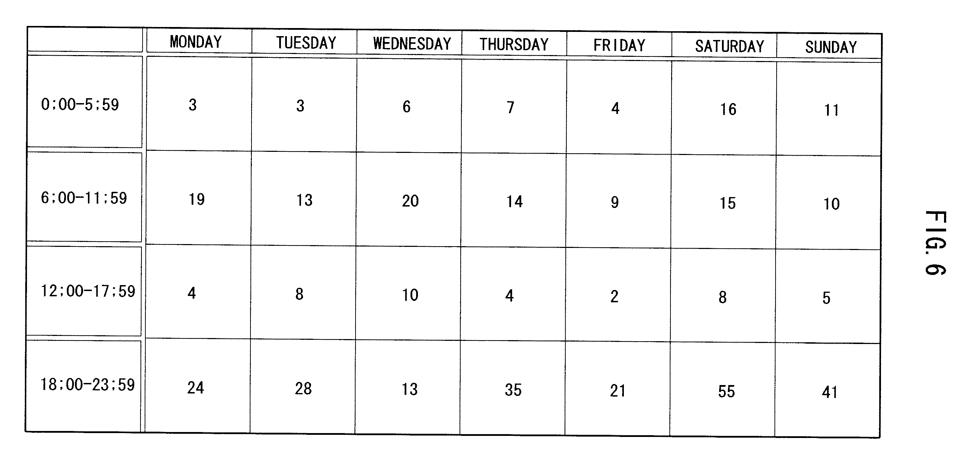

Next, a second embodiment of the present invention will be described with reference to FIG. 6.

The difference between the second embodiment and the first embodiment lies in that the volume of hot water is recorded in addition to the calendar information and time when hot water is supplied to the supply destination 26 or the bath tub 43. The same components as those of the aforementioned first embodiment are denoted by the same reference numerals and the description thereof will be omitted.

In other words, the supply record 67b is a file for recording the calendar information, the time and the volume of hot water when hot water is supplied to the supply destination 26 or the bath tub 43, and it records the volume of supplied hot water during a period of one week by unit of six hours for each day, for example, as shown in FIG. 6.

The first control unit 60, upon flow rate data being input from the flowmeters 37 and 38 via the flow rate detection unit 62, obtains the calendar information and the time by means of its own calendar function and clock function, and updates the supply record 67b stored in the memory unit 67 by recording the total of flow rate data input during the period of 6:00 to 11: 59, Monday, i.e., "19" liters, in the field of 6:00 to 11: 59, Monday, for example. Also, when the first control unit 60 has created the supply record 67b for a period of one week shown in FIG. 6, it sets an update timing in an update cycle set in advance and stored in its own memory, for example, an update cycle of one week, based on the supply record 67b, and records it in its own memory. As a result, the update timing is set based on the calendar information and times, and the volume of hot water recorded in the supply record 67b during a predetermined time period.

In the present embodiment, the time in the middle of the period of 12:00 to 17:59, Friday whose volume of hot water is the smallest in the supply record 67b shown in FIG. 6, that is, 15: 00, Friday, is set as the update timing. As a result, the update timing is set based on the time period whose volume of hot water is the smallest in the calendar and times, and the volume of hot water recorded in the supply record 67b during the predetermined time period.

The supply record 67b is not limited to the case where the volume of hot water itself is recorded, and it is possible that the supply record 67b stored in the memory unit 67 is updated by recording weighted volume of hot water, such as weighting the volume of hot water supplied to the supply destination 26 or the bath tub 43 during the period of 6:00 to 11:59, Monday, as "1" when it is less than 10 liters, "2" when it is no less than 10 liters and less than 50 liters, and "3" when it is no less than 50 liters.

As described above, with the hot water supply device according to the present embodiment, in addition to advantageous effects similar to those of the first embodiment, the update timing is set based on a time period whose volume of hot water is the smallest in the calendar information and times and the volume of hot water recorded in the supply record 67b during a predetermined time period, and when the update timing has been reached, the control program 67a stored in the memory unit 67 is updated with the control program received by the wireless modem 66a. Accordingly, the possibility that hot water is supplied during updating of the control program 67a is lowered. As a result, the possibility that glitches such as supplying high-temperature hot water is reduced, and furthermore, such glitches can be prevented.

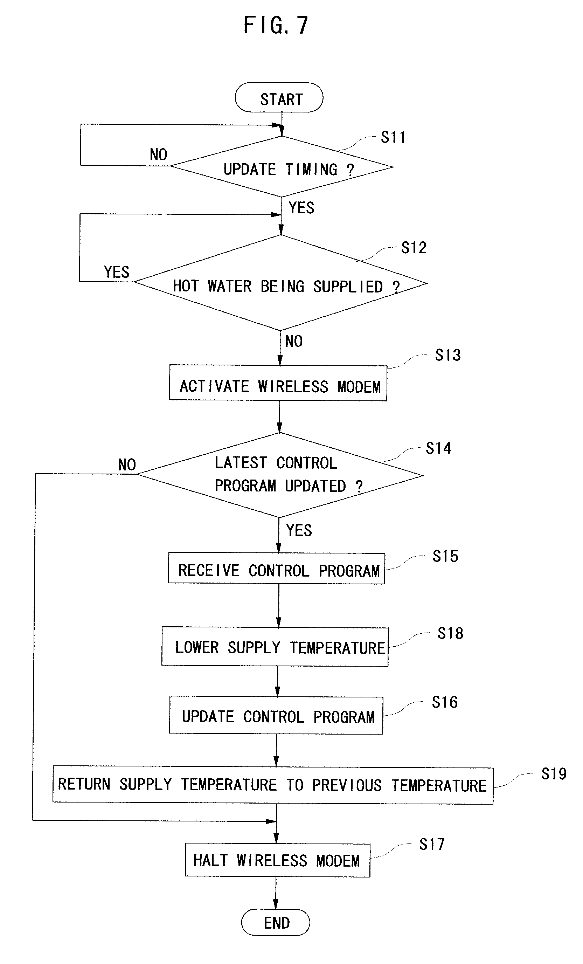

Next, a third embodiment according to the present invention will be described with reference to FIG. 7.

The difference between the third embodiment and the first embodiment lies in that the temperature of hot water to be supplied is lowered when the control program is updated. The same components as those of the aforementioned first embodiment are denoted by the same reference numerals, and the description thereof will be omitted.

In other words, as shown in FIG. 7, after performing the processing at steps S11 to S15 as in the first embodiment, the first control unit 60 lowers the temperature of hot water supplied to the supply destination 26 and the bath tub 43 to no more than a predetermined value by driving the first mixing valve 19, the second mixing valve 23 or the third mixing valve 27 via the valve drive unit 65, irrespective of operation data input from the first remote controller 63a and the second remote controller 63b via the operation unit 63 (step S18). As a result, high-temperature hot water is not supplied even when hot water is supplied during updating of the control program 67a stored in the memory unit 67.

Subsequently, the first control unit 60, as in the first embodiment, performs the processing at step S16 to update the control program 67a stored in the memory unit 67, and returns the temperature of hot water to be supplied to the supply destination 26 and the bath tub 43 to the previous temperature by driving the first mixing valve 19, the second mixing valve 23 or the third mixing valve 27 via the valve drive unit 65, based on the operation data input from the first remote controller 63a or the second remote controller 63b via the operation unit 63 (step S19).

As described above, since the temperature of hot water supplied to the supply destination 26 and the bath tub 43 becomes no more than a predetermined value when the control program 67a stored in the memory unit 67 is updated, the hot water supply device according to the present embodiment provides the advantageous effect of no high-temperature hot water being supplied even when hot water is supplied during updating of the control program 67a, in addition to advantageous effects similar to the first embodiment. As a result, it is further possible to prevent glitches.

The present invention may be configured by combining the configurations of the respective embodiments or partially replacing the configuration of one of the embodiments with the configuration of any of the other embodiments.

Furthermore, the configuration of the present invention is not limited only to the aforementioned embodiments, and various modifications that do not depart from the scope and spirit of the present invention may be made on it.

## Claims

1. A hot water supply device including a memory means (67) for storing a control program (67a), and a communication means (66a) for communicating with an external server (S) having a latest control program stored therein via a communication network (N), the device supplying hot water based on the control program (67a) stored in the memory means (67), the device comprising:
a communication control means for activating the communication means (66a), the communication means being halted, and making the communication means (66a) receive the latest control program stored in the server (S) when the control program has been updated;
a recording means (67b) for recording a calendar information and a time when hot water is supplied; and
an update control means (60) for updating the control program stored in the memory means (67) with the control program received by the communication means (66a), based on the calendar information and the time recorded during a predetermined time period.

2. The hot water supply device according to claim 1, wherein the update control means (60) updates the control program (67a) stored in the memory means (67) with the control program (67a) received by the communication means (66a), based on a time period whose time of no hot water being supplied is the longest in the calendar information and the time recorded in the predetermined time period.

3. The hot water supply device according to claim 1, further comprising
hot water volume measuring means (37) and (38) for measuring a volume of hot water to be supplied, wherein:
the memory means (67) stores the volume of hot water in addition to the calendar information and the time when the hot water is supplied; and
the update control means (60) updates the control program (67a) stored in the memory means (67) with the control program received by the communication means (66a), based on the calendar information and the time and hot water volumes recorded during the predetermined time period.

4. The hot water supply device according to claim 3, wherein the update control means (60) updates the control program (67a) stored in the memory means (67) with the control program (67a) received by the communication means (66a), based on a time period whose hot water supply volume is the smallest in the calendar information and the time and the hot water volumes recorded by the recording means during the predetermined time period.

5. The hot water supply device according to claim 1, further comprising a supply temperature control means for, when the update control means (60) updates the control program (67a) stored in the memory means (67), making the temperature of hot water to be supplied to be no more than a predetermined value.

6. The hot water supply device according to claim 2, further comprising a supply temperature control means for, when the update control means (60) updates the control program (67a) stored in the memory means (67), making the temperature of hot water to be supplied to be no more than a predetermined value.

7. The hot water supply device according to claim 3, further comprising a supply temperature control means for, when the update control means (60) updates the control program (67a) stored in the memory means (67), making the temperature of hot water to be supplied to be no more than a predetermined value.

8. The hot water supply device according to claim 4, further comprising a supply temperature control means for, when the update control means (60) updates the control program (67a) stored in the memory means (67), making the temperature of hot water to be supplied to be no more than a predetermined value.

9. The hot water supply device according to claims 1 to 8, wherein the calendar information recorded by the recording means (67b) includes at least one of year, month, date, day, public holiday, high day, and season.
